(19) Europäisches Patentamt
European Patent Office
Office européen des brevets

(11) **EP 3 486 094 A1**

(12) **DEMANDE DE BREVET EUROPEEN**

(43) Date de publication:
**22.05.2019 Bulletin 2019/21**

(51) Int Cl.:
**B60B 21/00** *(2006.01)*        **B60B 21/02** *(2006.01)*
**B60B 25/00** *(2006.01)*        *B60B 21/04* *(2006.01)*

(21) Numéro de dépôt: **18206618.3**

(22) Date de dépôt: **15.11.2018**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(30) Priorité: **21.11.2017 FR 1761016**

(71) Demandeur: **Safran Landing Systems
78140 Vélizy-Villacoublay (FR)**

(72) Inventeurs:
• **SOUBRANT, Pierrick**
**78140 VELIZY-VILLACOUBLAY (FR)**
• **ARNOUX, Michaël**
**63040 CLERMONT-FERRAND (FR)**

(74) Mandataire: **Lavialle, Bruno François Stéphane et al**
**Cabinet Boettcher
16, rue Médéric
75017 Paris (FR)**

(54) **JANTE DE ROUE FREINÉE D AÉRONEF**

(57) L'invention concerne une jante de roue freinée d'aéronef comportant une portion circulaire externe (103) terminée à ses extrémités par des talons (106a,106b) pour recevoir un pneumatique, la portion circulaire externe étant reliée par un voile (105) à un moyeu destiné (104) à être rapporté sur un essieu d'atterrisseur pour tourner autour d'un axe de rotation coïncidant avec un axe central (X) de la jante. Selon l'invention, la portion circulaire externe (103a), du côté du voile destiné à recevoir un frein, présente dans un plan passant par l'axe central de la roue, un profil comportant une double pente α, β par rapport à une direction parallèle à l'axe central depuis le voile jusqu'au talon correspondant, en s'évasant vers celui-ci.

Fig. 2B

EP 3 486 094 A1

**Description**

L'invention concerne une jante de roue freinée d'aéronef.

ARRIERE PLAN DE L'INVENTION

On connaît des roues d'aéronef montées sur des atterrisseurs principaux d'aéronef et destinés à coopérer avec un frein. En général, le frein comporte des disques qui s'étendent à l'intérieur de la jante de la roue, dont des disques stators arrêtés en rotation disposés en alternance avec des disques rotors entraînés en rotation par la jante de la roue par des barrettes solidaires de la jante qui s'étendent dans des encoches périphériques de disques rotors. Une pression commandée sur l'ensemble des disques génère du frottement entre les disques en regard et donc un couple de freinage qui ralentit la rotation de la roue. La température des disques de frein est susceptible d'augmenter fortement en conséquence des freinages exercés sur la roue. Il importe de faire en sorte que la température de la jante n'atteigne pas des températures qui pourraient être préjudiciables au pneumatique porté par la jante. En outre, les décollages ne sont autorisés que si la température des freins ne dépasse pas un seuil de sécurité donné fixé à 400°C. Cette contrainte oblige parfois le pilote à attendre que la température de tous les freins soit descendue sous ledit seuil pour pouvoir entamer son déplacement, augmentant le temps d'escale (en anglais TAT pour turn-around time).

Pour accélérer le refroidissement des freins, il est connu d'organiser un flux convectif d'air autour des disques de frein au moyen d'un ventilateur fixé à l'extrémité de l'essieu. Cependant, un tel équipement, outre qu'il gêne l'accès à la roue pour son remplacement ou sa maintenance, est lourd (typiquement plusieurs kilogrammes), est source de bruit, et augmente les risques d'oxydation du carbone des disques de freins. Les avionneurs cherchent à se passer d'un tel équipement.

OBJET DE L'INVENTION

L'invention vise à proposer une jante facilitant naturellement le refroidissement des disques de freins sans recours à un ventilateur.

PRESENTATION DE L'INVENTION

En vue de la réalisation de ce but, on propose une jante de roue freinée d'aéronef comportant une portion circulaire externe terminée à ses extrémités par des talons pour recevoir un pneumatique, la portion circulaire externe étant reliée par un voile à un moyeu destiné à être rapporté sur un essieu d'atterrisseur pour permettre une rotation de la jante autour d'un axe central de la jante, la jante étant destinée à recevoir un pneumatique sur l'extérieur de la portion circulaire externe, et un frein à l'intérieur de celle-ci, d'un côté du voile. Selon l'invention, la portion circulaire externe du côté du voile destiné à recevoir un frein présente, dans un plan passant par l'axe central de la roue, un profil comportant une double pente par rapport à une direction parallèle à l'axe central depuis le voile jusqu'au talon correspondant en s'évasant vers celui-ci.

Ce profil en double pente ménage un espace entre la périphérie des disques de frein et la jante qui favorise un flux convectif naturel d'air passant au travers du voile vers l'extérieur, améliorant le refroidissement naturel du frein. Ce profil favorise également l'évacuation de chaleur par radiation.

DESCRIPTION DES FIGURES

L'invention sera mieux comprise à la lumière de la description qui suit d'un mode particulier de réalisation de l'invention, en référence aux figures des dessins annexés, parmi lesquelles :

- La figure 1A est une vue en perspective d'une jante de roue d'aéronef selon l'art antérieur ;
- La figure 1B est une vue en perspective analogue à celle de la figure 1A d'une jante de roue d'aéronef selon un mode particulier de réalisation de l'invention ;
- la figure 2A est une vue en coupe partielle selon un plan passant par l'axe central de la jante de la figure 1A ;
- la figure 2B est une vue en coupe partielle selon un plan passant par l'axe central de la jante de la figure 1B ;
- les figures 3A et 3B sont des figures identiques aux figures 2A et 2B montrant les flux convectifs autour des disques de freins ;
- les figures 4A et 4B sont des figures identiques aux figures 2A et 2B montrant le trajet des radiations des disques de freins ;
- la figure 5 est une vue en coupe partielle selon un plan passant par l'axe central de la jante de la figure 1B, au niveau de l'un des tenons supportant une barrette.

DESCRIPTION DETAILLEE DE L'INVENTION

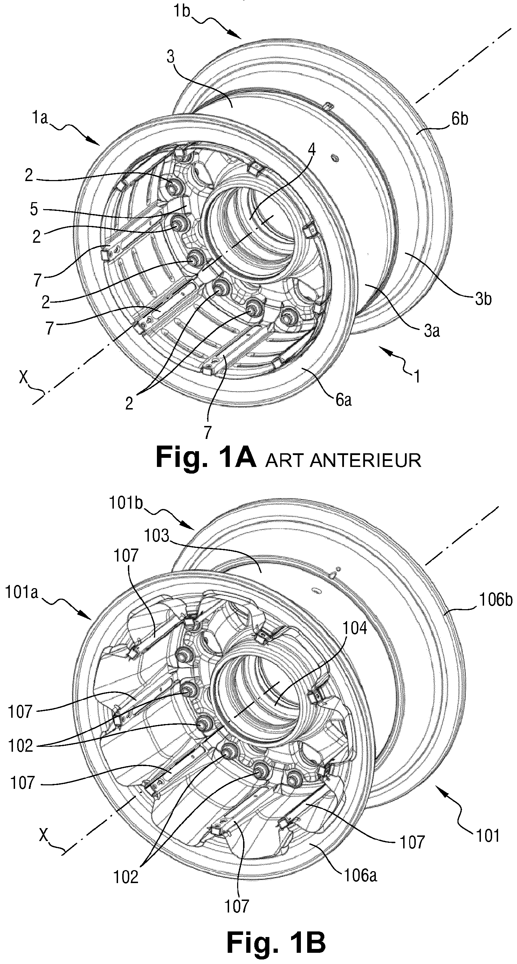

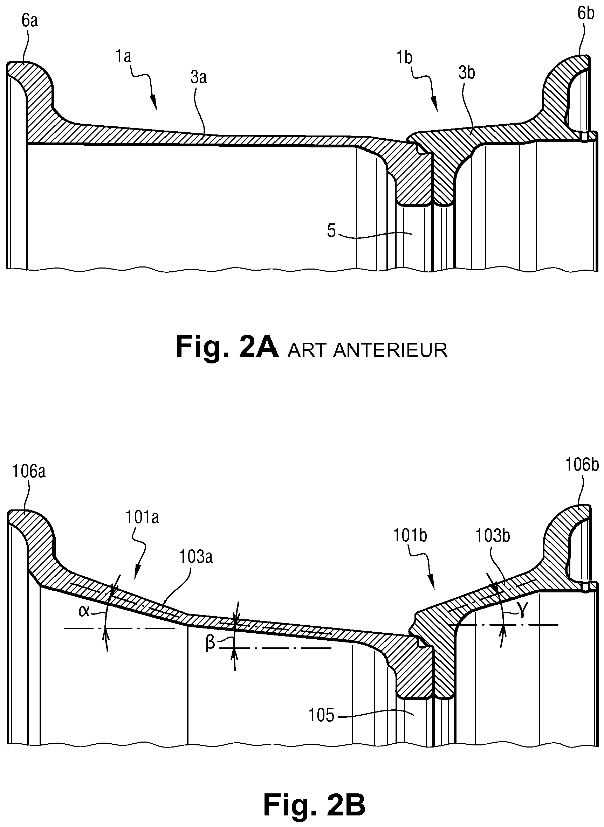

La figure 1A illustre une jante 1 de roue freinée connue en soi composée ici de deux demi-jantes 1a et 1b solidarisées entre elles par des boulons 2 au niveau du voile. La jante 1 comporte une portion externe circulaire 3 destinée à recevoir un pneumatique (non représenté ici). La jante comporte un moyeu 4 relié par un voile 5 ajouré à la portion externe circulaire 3. Le moyeu 4 est destiné à recevoir des roulements pour le montage de la roue sur un essieu d'atterrisseur d'aéronef de sorte que la roue tourne autour d'un axe de rotation coïncidant avec un axe central X de la roue. La portion externe circulaire 3 comprend deux parties 3a, 3b portées respectivement par les deux demi-jantes 1a et 1b et terminées par des talons respectifs 6a, 6b. Ici, la demi-jante la est destinée à recevoir des disques de freins et comporte des tenons 7 qui s'étendent parallèlement à l'axe central X pour recevoir une barrette engagée dans des encoches périphériques des disques de freins. Comme cela est visible à la figure 2A, le profil de la portion circulaire externe 3 s'étend de façon sensiblement parallèle à l'axe central X.

En référence maintenant aux figures 1B et 2B illustrant une jante selon un mode particulier de l'invention, et sur lequel les éléments communs à la jante de l'art antérieur portent une référence numérique augmentée d'une centaine, la jante 101 comporte toujours une portion externe 103 circulaire et est également en deux parties 101a, 101b reliées par des boulons 102 au niveau du voile 105. Mais, et selon l'invention, le profil de la partie 103a de la portion circulaire externe 103 présente une double pente (angle α et angle β) par rapport à une direction parallèle à l'axe central X de sorte à être évasé depuis le voile 105 jusqu'au talon 106a. Cette disposition impose de donner un angle (angle γ) au profil de la partie 103b pour que le talon 106b soit à même hauteur que le talon 106a.

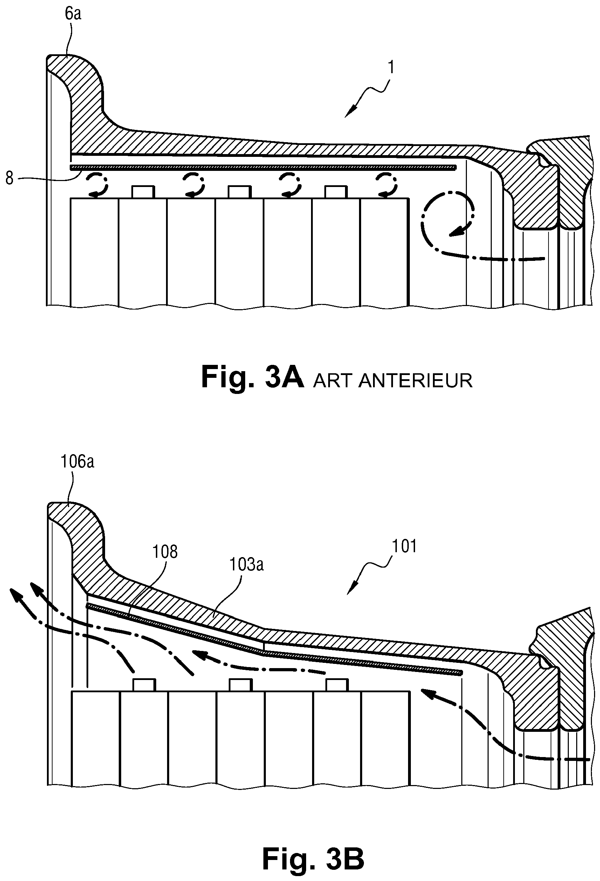

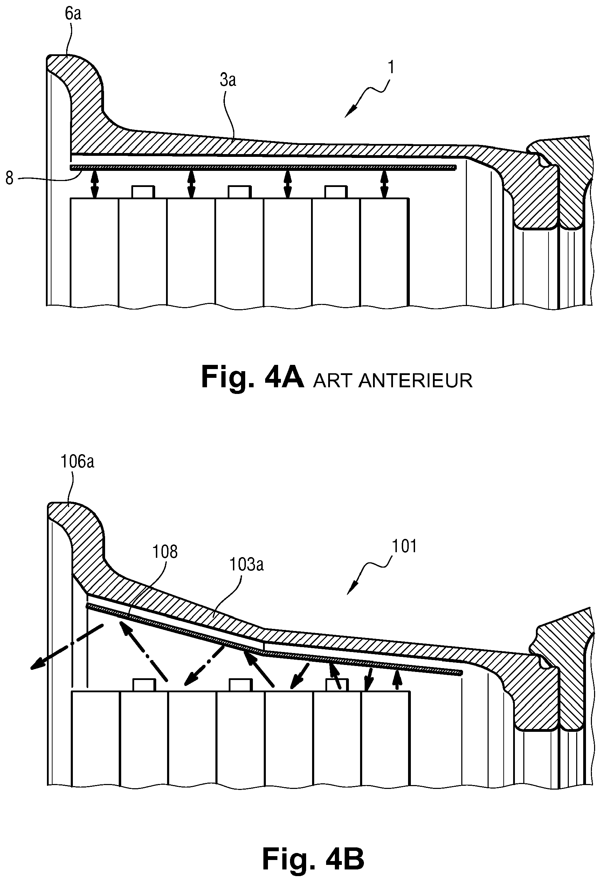

La double pente selon l'invention dégage un espace entre la jante 101 et la périphérie de la pile de disques, facilitant l'établissement d'un flux convectif naturel passant au travers des jours du voile 105 pour lécher les disques et être évacué vers l'extérieur. L'espace ainsi dégagé éloigne la jante de la source de chaleur constituée par les disques. Comme cela est visible par comparaison des figures 3A, 3B où les mouvements d'air sont schématisés par des flèches, l'air chauffé par les disques a tendance à stagner entre la jante et les disques de frein sur une jante classique, tandis qu'il s'évacue naturellement avec une jante selon l'invention du fait de l'évasement de l'espace autour de la périphérie des disques de freins. Par ailleurs, et comme cela est visible par comparaison des figures 4A, 4B, le flux de chaleur émis par rayonnement par les disques de freins se réfléchit sur l'écran 8 protégeant la jante classique et revient vers les disques tandis que dans la jante selon l'invention, le flux de chaleur émis par rayonnement se réfléchit sur l'écran 108 qui dirige ce rayonnement vers l'extérieur. Ces dispositions améliorent grandement le refroidissement des disques de freins et contribuent à diminuer le temps d'escale.

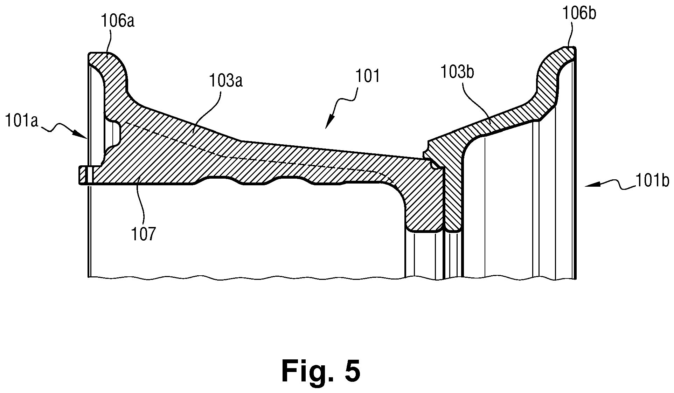

Bien entendu, et comme cela est visible à la figure 5, la double pente conduit à des tenons 107 de volume et donc de masse plus importante que sur une jante classique, afin que les barrettes puissent s'étendre selon une direction parallèle à l'axe central X. Néanmoins, les inventeurs ont vérifié que cette augmentation de masse des tenons est sensiblement moins importante que celle qui aurait résulté de l'utilisation d'une simple pente. C'est un autre avantage de la double pente.

On remarquera en outre que les talons 106a, 106b sont éloignés de l'axe central X pour un même diamètre des disques de freins, en comparaison des talons d'une jante classique, ce qui nécessite de monter des pneumatiques avec un diamètre d'accrochage plus important.

Cependant, ces inconvénients sont largement compensés par l'amélioration du refroidissement obtenue sans ventilateur. Des simulations ont montré que pour des angles compris dans les plages suivantes :

$$5° \leq \alpha \leq 30°, \ 0° \leq \beta \leq 30°,$$

où l'angle α est la pente du profil partant du talon 106a et l'angle β est la pente du profil arrivant au voile 105, on obtient une accélération du refroidissement des disques de frein par rapport à une jante classique induisant une diminution du temps d'escale pouvant atteindre 20%. La situation la plus favorable du point de vue du ratio diminution du temps d'escale / augmentation de masse intervient quand l'angle α est plus grand que l'angle β, comme illustré sur les figures, et en particulier lorsque les angles α et β sont compris dans les plages suivantes :

$$10° \leq \alpha \leq 30°, \ 0° \leq \beta \leq 10°.$$

L'invention n'est pas limitée à ce qui vient d'être décrit et englobe au contraire toute variante entrant dans le cadre défini par les revendications. En particulier, bien que dans l'exemple illustré, la jante soit en deux parties, l'invention s'applique bien sûr à une jante monobloc donc l'un des talons est amovible pour permettre la mise en place du pneumatique.

## Revendications

1. Jante de roue freinée d'aéronef comportant une portion circulaire externe (103) terminée à ses extrémités par des talons (106a,106b) pour recevoir un pneumatique, la portion circulaire externe étant reliée par un voile (105) à un moyeu destiné (104) à être rapporté sur un essieu d'atterrisseur pour tourner autour d'un axe de rotation coïncidant avec un axe central (X) de la jante, la jante étant destinée à recevoir un pneumatique sur l'extérieur de la portion circulaire externe, et un frein à l'intérieur de celle-ci, d'un côté du voile, **caractérisé en ce que** la portion circulaire externe (103a), du côté du voile destiné à recevoir un frein, présente dans un plan passant par l'axe central de la roue, un profil comportant une double pente α, β par rapport à une direction parallèle à l'axe central depuis le voile jusqu'au talon correspondant, en s'évasant vers celui-ci.

2. Jante selon la revendication 1, dans lequel la double pente se situe dans les plages :

$$5° \leq \alpha \leq 30°, \; 0° \leq \beta \leq 30°,$$

où l'angle $\alpha$ est la pente du profil partant du talon (106a) correspondant et l'angle $\beta$ est la pente du profil arrivant au voile (105).

**3.** Jante selon la revendication 2, dans lequel les angles sont tels que $\alpha > \beta$.

**4.** Jante selon la revendication 3, dans lequel les angles $\alpha$ et $\beta$ sont compris dans les plages :

$$10° \leq \alpha \leq 30°, \; 0° \leq \beta \leq 10°.$$

**5.** Jante selon la revendication 1, dans lequel la jante comporte deux demi-jantes (101a, 101b) reliées entre elles par des boulons (102) au niveau du voile (105) .

**Fig. 1A** ART ANTERIEUR

**Fig. 1B**

6a    1a    3a    1b    3b    6b

5

**Fig. 2A** ART ANTERIEUR

106a    101a    103a    101b    103b    106b

α    β    γ

105

**Fig. 2B**

6a

1

8

**Fig. 3A** ART ANTERIEUR

106a

108    103a    101

**Fig. 3B**

**Fig. 4A** ART ANTERIEUR

**Fig. 4B**

**Fig. 5**

Europäisches Patentamt

European Patent Office

Office européen des brevets

## RAPPORT DE RECHERCHE EUROPEENNE

Numéro de la demande

EP 18 20 6618

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 2 746 611 A1 (MESSIER BUGATTI DOWTY [FR]) 25 juin 2014 (2014-06-25) * abrégé; figures 1-4 * ----- | 1-5 | INV. B60B21/00 B60B21/02 B60B25/00 |
| X | US 3 251 437 A (MOYER EDWARD L ET AL) 17 mai 1966 (1966-05-17) | 1-3,5 | ADD. |
| A | * colonne 2, ligne 43 - colonne 3, ligne 60; figure 3 * ----- | 4 | B60B21/04 |
| X | FR 2 990 188 A1 (MESSIER BUGATTI DOWTY [FR]) 8 novembre 2013 (2013-11-08) * page 1, ligne 43 - page 2, ligne 32; figure 2 * ----- | 1-5 | |

DOMAINES TECHNIQUES RECHERCHES (IPC)

B60B

Le présent rapport a été établi pour toutes les revendications

| Lieu de la recherche | Date d'achèvement de la recherche | Examinateur |
|---|---|---|
| Munich | 8 avril 2019 | Schreck, Mathias |

EPO FORM 1503 03.82 (P04C02)

**EP 3 486 094 A1**

## ANNEXE AU RAPPORT DE RECHERCHE EUROPEENNE
## RELATIF A LA DEMANDE DE BREVET EUROPEEN NO.

EP 18 20 6618

08-04-2019

| Document brevet cité au rapport de recherche | | Date de publication | Membre(s) de la famille de brevet(s) | | Date de publication |
|---|---|---|---|---|---|
| EP 2746611 | A1 | 25-06-2014 | CA | 2835921 A1 | 20-06-2014 |
| | | | CN | 103879553 A | 25-06-2014 |
| | | | EP | 2746611 A1 | 25-06-2014 |
| | | | FR | 2999982 A1 | 27-06-2014 |
| | | | US | 2014175860 A1 | 26-06-2014 |
| US 3251437 | A | 17-05-1966 | FR | 1439992 A | 27-05-1966 |
| | | | GB | 1091693 A | 22-11-1967 |
| | | | US | 3251437 A | 17-05-1966 |
| FR 2990188 | A1 | 08-11-2013 | AUCUN | | |

EPO FORM P0460